(19) Europäisches Patentamt
European Patent Office
Office européen des brevets

(11) **EP 3 414 588 B1**

(12) **EUROPÄISCHE PATENTSCHRIFT**

(45) Veröffentlichungstag und Bekanntmachung des Hinweises auf die Patenterteilung:
**29.04.2026   Patentblatt 2026/18**

(21) Anmeldenummer: **17705571.2**

(22) Anmeldetag: **09.02.2017**

(51) Internationale Patentklassifikation (IPC):
**G01S 3/14** *(2006.01)*         **G01S 7/03** *(2006.01)*
**G01S 13/75** *(2006.01)*        **G06K 7/10** *(2006.01)*
**H01Q 25/02** *(2006.01)*

(52) Gemeinsame Patentklassifikation (CPC):
**G01S 3/14; G01S 7/03; G01S 13/75;**
**G06K 7/10356; H01Q 25/02**

(86) Internationale Anmeldenummer:
**PCT/EP2017/052938**

(87) Internationale Veröffentlichungsnummer:
**WO 2017/137525 (17.08.2017 Gazette 2017/33)**

(54) **VORRICHTUNG UND VERFAHREN ZUR POSITIONSBESTIMMUNG EINES SENDERS RELATIV ZU EINEM DETEKTIONSBEREICH**

DEVICE AND METHOD FOR DETERMINING THE POSITION OF A TRANSMITTER IN RELATION TO A DETECTION AREA

DISPOSITIF ET PROCÉDÉ DE DÉTERMINATION DE LA POSITION D'UN ÉMETTEUR PAR RAPPORT À UNE ZONE DE DÉTECTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.02.2016   DE 102016202203**
**20.07.2016   DE 102016213240**

(43) Veröffentlichungstag der Anmeldung:
**19.12.2018   Patentblatt 2018/51**

(73) Patentinhaber: **Fraunhofer-Gesellschaft zur Förderung der angewandten Forschung e.V.**
**80686 München (DE)**

(72) Erfinder:
- **SCHÜHLER, Mario**
  **91090 Effeltrich (DE)**
- **WEISGERBER, Lars**
  **02727 Ebersbach-Neugersdorf (DE)**

- **ARENDT, Johannes**
  **91054 Erlangen (DE)**
- **WANSCH, Rainer**
  **91083 Baiersdorf (DE)**
- **MILOSIU, Heinrich**
  **91056 Erlangen (DE)**
- **OEHLER, Frank**
  **91325 Adelsdorf (DE)**

(74) Vertreter: **Hersina, Günter et al Schoppe, Zimmermann, Stöckeler Zinkler, Schenk & Partner mbB Patentanwälte Radlkoferstrasse 2 81373 München (DE)**

(56) Entgegenhaltungen:
**WO-A1-2009/147662       WO-A1-2011/110882**
**US-A1- 2011 169 613**

EP 3 414 588 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

# EP 3 414 588 B1

## Beschreibung

Die Erfindung bezieht sich auf eine Vorrichtung zur Bestimmung mindestens einer Information über eine Position mindestens eines Senders. Weiterhin bezieht sich die Erfindung auf ein Verfahren zur Ermittlung einer Information über eine Position eines Senders relativ zu einem Detektionsbereich.

In Logistik und Produktion finden immer häufiger hochfrequente Transponder (RFID-Transponder oder RFID-Tags für "radio-frequency identification") Anwendung, die eine Identifikation von Objekten erlauben. Typischerweise sind diese Transponder (hier und im Folgenden als alternative Bezeichnung für RFID-Transponder) passiv, so dass sie durch ein hochfrequentes elektromagnetisches Feld in Form eines Anregungssignals angeregt werden müssen. Der Transponder nutzt dieses Signal zur Energiegewinnung und sendet in Antwort auf die Anregung ein moduliertes Signal zurück an das RFID-Lesegerät (alternative Bezeichnung ist RFID-Reader oder im Folgenden auch einfach Lesegerät). Im Antwortsignal sind dabei Informationen des Transponders erhalten, die von dem Lesegerät ausgewertet werden können. Damit kann ein Objekt über einen Transponder eindeutig identifiziert und zugeordnet werden.

RFID-Transponder finden unter anderem bei der Flusskontrolle von Waren oder Werkstücken Anwendung. Dabei ist es wichtig, die Transponder an einer bestimmten Position entlang des Förderwegs auszulesen. Dadurch lassen sich beispielsweise Förderbänder bzgl. ihrer Geschwindigkeit regulieren oder stoppen, es lassen sich Türen für autorisierte Personen automatisch öffnen oder es lässt sich die Ein- und Ausfuhr von Objekten kontrollieren.

Typischerweise befinden sich aber mehrere Objekte hintereinander, so dass deren Transponder quasi gleichzeitig ausgelesen werden. Die Zuordnung eines einzelnen Transponders zu einer bestimmten Position ist daher nicht immer garantiert und es kann zur Verwechslung von Transpondern kommen. Für die Flusskontrolle der Objekte ist jedoch die eindeutige Identifizierung an einer vorbestimmten Position erforderlich. Somit sind jeweils zwei Daten zu ermitteln: Identifizierung des Objekts und Identifizierung der Position des Objekts oder zumindest des Zeitpunkts, wann eine ausgewählte Position von dem Objekt eingenommen bzw. passiert wird.

Heutige Systeme, wie sie bei Tor-Durchfahrten bzw. Verfahr-Einheiten eingesetzt werden, bestehen zumeist aus einem RFID-Lesegerät mit ein bis vier Anschlüssen (sogenannte Tore), an denen jeweils eine Antenne angeschlossen werden kann. Über die Antenne bzw. die jeweilige Antenne wird das hochfrequente Anregungssignal ausgesendet und werden die Antwortsignale der RFID-Transponder empfangen.

Bei RFID-Lesegeräten mit lediglich einem einzelnen Anschluss wird in der Regel eine Antenne bestehend aus einem einzelnen Strahler angeschlossen. Dies ermöglicht zwar die Erfassung von Transpondern, aber nicht die Ermittlung einer eindeutigen Richtungsinformation.

Bei RFID-Lesegeräten mit mehreren Toren wird je Tor eine Antenne bestehend aus einem einzelnen Strahler als einem Antennenelement angeschlossen. Zwischen den Antennen wird typischerweise innerhalb des Lesegeräts sequentiell umgeschaltet, indem die an den Toren anliegenden Signale der weiteren Auswertung zugeführt werden. Durch eine örtliche Verteilung der Antennen kann auf die Lage der Transponder geschlossen werden. Allerdings ist die Richtungsinformation sehr ungenau bzw. mehrdeutig. Zudem geht mit der Verteilung der Antennen ein hoher Platzbedarf und somit ein hoher Installationsaufwand einher.

Im UHF-Bereich (Frequenzbereich 860 MHz bis 960 MHz für globalen Einsatz gemäß "EPC Radio-Frequency Identity Protocols Class-1 Generation-2 UHF RFID Protocol for Communications at 860 MHz - 960 MHz") besteht eine mögliche Lösung für die Flusskontrolle darin, Antennen mit geringer Reichweite zu verwenden. Dadurch lassen sich nur solche RFID-Transponder erfassen, die sich in geringem Abstand zur Antenne befinden, insbesondere nur wenige Zentimeter davon entfernt sind (siehe z. B. [1], [2]). Bei der Installation muss daher darauf geachtet werden, dass sich die zu erkennenden Transponder tatsächlich sehr nah an der Antenne vorbei bewegen. Dazu kann es erforderlich sein, stark in einen etablierten Prozess einzugreifen, um die Transponder identifizieren und deren Fluss kontrollieren zu können.

Alternativ können RFID-Transponder und RFID-Lesegeräte für den HF-Bereich (Frequenz 13,56 MHz gemäß "EPC Radio-Frequency Identity Protocols EPC Class-1 HF RFID Air Interface Protocol for Communications at 13.56 MHz") eingesetzt werden, die typischerweise bei Nahbereichsanwendungen wie elektronischen Zahlungsvorgänge zum Einsatz kommen. Die Reichweite ist dabei auf Zentimeter beschränkt. Zudem sind besondere Hochfrequenz-RFID-Transponder erforderlich. Ein Objekt, das bereits mit einem üblichen UHF-RFID-Transponder ausgestattet ist, müsste daher, um entlang der Wertschöpfungskette z. B. bei Tordurchfahrten erfasst werden zu können, zusätzlich einen solchen HF-RFID-Transponder mit sich führen. Damit gehen höhere Kosten und ein größerer logistischer Aufwand einher.

Aus der US 2011/169613 A1 ist ein tragbarer RFID-Leser bekannt, der ein aktives Antennenarray aufweist welches eine Vielzahl von Antennenelementen zum Empfangen von RFID-Signalen von RFID-Sendern umfasst. Weiterhin offenbart ist eine Steuerschaltung zum Steuern einer Richtcharakteristik des Antennenarrays.

Weiterhin ist aus der WO 2009/147662 A1 ein Peiler zum Bestimmen, ob sich ein Zielobjekt innerhalb eines vordefinierten interessierenden Richtungssektors befindet bekannt, der als eine spezielle Schwellwertdifferenz zwischen einem R-Referenzwert und einem N-Nullwert vordefiniert ist, wobei der Peiler aufweist: a. mindestens zwei Antennen, die in einer Breitseitenkonfiguration angeordnet sind; b. eine drahtlose Kommunikationseinheit zum Aufbauen einer Kommunikation mit einem Zielobjekt über ein drahtloses Kommunikationssignal; c. ein variables Dämpfungsglied zum Dämpfen des drahtlosen Kommunikationssignals; d. eine Hybridverbindung zur Ermöglichung einer drahtlosen Kommunikation des Signals über die Antennen in einemerzeugten phasengleichen oder phasenverschobenen Muster; und e. eine Verarbeitungseinheit, die für Folgendes ausgelegt ist: e.1. Schaltender Hybridverbindung bei einer Stufe 1, um ein phasengleiches Muster zu erzeugen, Dämpfen des Signals, bis die drahtlose Kommunikation verloren ist, und Aufzeichnen des Dämpfungswertes, der dem Verlust an drahtloser Kommunikation entspricht, als einen R-Referenzwert; e.2. Schalten der Hybridverbindung bei einer Stufe 2, um ein phasenverschobenes Muster zu erzeugen, Dämpfen des Signals, bis die drahtlose Kommunikation verloren ist, und Aufzeichnen des Dämpfungswertes, der dem Verlust an drahtloser Kommunikation entspricht, als einen N-Nullwert; e.3. Bestimmen der Differenz R-N, wobei eine Differenz oberhalb der vordefinierten speziellen Schwellwertdifferenz bedeutet, dass sich das Zielobjekt innerhalb desinteressierenden Richtungssektors befindet, und eine Differenz unterhalb der vordefinierten speziellen Schwellwertdifferenz bedeutet, dass sich das Zielobjekt außerhalb des interessierenden Richtungssektors befindet.

Die WO 2011/110882 A1 offenbart ein System zur Positionsbestimmung, welches RF-Tags verwendet. Das System umfasst mindestens zwei Phased-Array-Antennen und eine Einheit zur Bestimmung der Position des RF-Tags mit den mindestens zwei Phased-Array-Antennen.

Weiterhin offenbart die DE 10 2008 012534 A1 eine mit einer Sende-Empfangs-Einheit ausgestattete Vorrichtung zur Bestimmung der relativen Position gegenübereinem Transponder oder einem RFID-Tag aufgrund einer Relativbewegung einer zur Energieübertragung auf den Transponder bestimmten Sendspule der Sende-Empfangs-Einheit der Vorrichtung gegenüber dem Transponder oder dem RFID-Tag. Weiterhin betrifft die Erfindung ein Verfahren zur Bestimmung der relativen Position aufgrund einer Relativbewegung eines Transponders oder RFID-Tags gegenüber einer zur Energieübertragung auf den Transponder bestimmten Sendspule der Sende-Empfangs-Einheit und mit einer Spulenanordnung.

Die der Erfindung zugrundeliegende Aufgabe besteht darin, eine Vorrichtung und ein Verfahren vorzuschlagen, die es erlauben zu erkennen, ob und vorzugsweise wann ein Objekt eine vorgegebene Position passiert, und die - zumindest teilweise - die Nachteile des Standes der Technik vermeiden.

Die Erfindung löst die Aufgabe durch eine Vorrichtung zur Bestimmung mindestens einer Information über eine Position mindestens eines die Vorrichtung passierenden Senders gemäß Anspruch 1. Die Vorrichtung weist dabei eine Antennenvorrichtung und eine Datenverarbeitungsvorrichtung auf. Die Antennenvorrichtung ist derartig ausgestaltet, von dem Sender ausgehende Signale zu empfangen. Die Antennenvorrichtung weist mindestens zwei ausgezeichnete Richtcharakteristik auf. Dabei beziehen sich die ausgezeichneten Richtcharakteristiken jeweils auf eine Menge an räumlich unterschiedlichen Empfangsempfindlichkeiten der Antennenvorrichtung. Die ausgezeichneten - alternativ auch als "speziell" oder "ausgesucht" bezeichnete - Richtcharakteristiken verfügen jeweils über mindestens ein Empfangsminimum, das einem räumlichen Detektionsbereich zugeordnet ist. Weiterhin ist die Datenverarbeitungsvorrichtung derartig ausgestaltet, zumindest die von der Antennenvorrichtung mit der ausgezeichneten Richtcharakteristik empfangenen Signale im Hinblick auf die Position des Senders relativ zu Detektionsbereichen auszuwerten.

Die erfindungsgemäße Vorrichtung verfügt über eine Antennenvorrichtung mit mindestens zwei ausgezeichneten Richtcharakteristiken. Die Richtcharakteristiken beziehen sich dabei jeweils auf räumlich unterschiedliche Empfangsempfindlichkeiten. Dies bedeutet, dass die Antennenvorrichtung mit einer der Richtcharakteristiken Signale aus unterschiedlichen Raumbereichen unterschiedlich stark empfängt. Bei den ausgezeichneten Richtcharakteristiken ist sogar vorgesehen, dass in räumlichen Detektionsbereichen jeweils ein Minimum hinsichtlich des Empfangs von Signalen besteht. Das bedeutet, dass die Signale eines Senders, der sich in einem der Detektionsbereiche befindet, nur sehr schwach oder gar nicht von der Antennenvorrichtung empfangen werden. Sendet daher der Sender seine Signale mit gleicher Ausgangsleistung und bewegt er sich durch einen der Detektionsbereiche, so wird die Feldstärke der empfangenen Signale deutlich abnehmen oder sogar gegen Null gehen. Daher ist die Datenverarbeitungsvorrichtung derartig ausgestaltet, die empfangenen Signale daraufhin auszuwerten, in welcher Position sich der Sender relativ zu den Detektionsbereichen befindet. Im einfachsten Fall deutet ein Minimum der Feldstärke des empfangenen Signals an, dass sich der Sender in einem der Detektionsbereiche befindet. Bei einer größeren Feldstärke befindet sich der Sender außerhalb des jeweiligen Detektionsbereichs.

Für die Positionsermittlung ist daher in einer Ausgestaltung die Verwendung von Historiendaten, d. h. von abgespeicherten Messwerten, vorgesehen, so dass aus der Abnahme und anschließenden Zunahme der Signalamplitude der Zeitpunkt ermittelt wird, an dem der Sender die Detektionsbereiche passiert hat.

In einer Ausgestaltung weist die Vorrichtung eine Steuervorrichtung auf, die derartig ausgestaltet ist, die ausgezeichneten Richtcharakteristiken zum Empfangen von Signalen zu schalten, die von dem Sender ausgehen.

In einer Ausgestaltung schaltet die Steuervorrichtung insbesondere auch die ausgezeichneten Richtcharakteristiken.

Die folgende Ausgestaltung bezieht sich darauf, dass insbesondere neben der ausgezeichneten Richtcharakteristik noch eine weitere Richtcharakteristik vorhanden ist.

Die Datenverarbeitungsvorrichtung ist derartig ausgestaltet, zu unterschiedlichen Zeiten von der Antennenvorrichtung empfangene Signale im Hinblick auf die Position des Senders relativ zu den Detektionsbereichen auszuwerten. In dieser Ausgestaltung werden zu unterschiedlichen Zeiten Signale empfangen und wird der zeitliche Verlauf der Signale bzw. der daraus ermittelten Daten in Bezug auf die Position des Senders ausgewertet. So kann beispielsweise intrapoliert werden, zu welchem Zeitpunkt der Sender einen der Detektionsbereiche durchschritten hat. Da die Detektionsbereiche jeweils mit einem Empfangsminimum verbunden sind, ergibt sich beispielsweise ein Fall, dass die Amplitude der empfangenen Signale abnimmt und dann wieder zunimmt. Das bedeutet, dass der Sender sich zwischen der Abnahme und wieder Zunahme im jeweiligen Detektionsbereich befunden haben muss.

In einer Ausgestaltung bewegt sich der Sender nur in eine Richtung relativ zum Detektionsbereich. Die Bewegungsrichtung ist in einer Ausgestaltung parallel zu einer Achse, auf der sich die Antennenelemente der Antennenvorrichtung befinden. Weiterhin ist in einer Ausgestaltung vorgesehen, dass sich der Sender auf einer Achse senkrecht zum Detektionsbereich bewegt.

Bewegt sich der Sender nur auf einem bekannten Weg relativ zum Detektionsbereich, so vereinfacht dies die Auswertung der Signale. Insbesondere lässt sich für die Richtcharakteristiken auf eine durch die Bewegung des Senders bedingte Abfolge der Änderungen der Signale schließen. Dies wiederum erlaubt es, aus den Signalen auf die Position des Senders zu schließen. So ergibt sich beispielsweise für die oben bereits gennante Form der ausgezeichneten Richtcharakteristik der Ablauf von Amplitudenabnahme und dann wieder Amplitudenzunahme. Dies jeweils unter der Voraussetzung, dass der Sender im Wesentlichen stets mit der gleichen Feldstärke die Signale aussendet.

Folgt nun in einem Szenario ein weiterer Sender dem vorgenannten Sender, so kann es zwar auftreten, dass die Signale des weiteren Senders empfangen werden, da er sich jedoch räumlich hinter dem zuerst genannten Sender befindet, werden dessen Signale mit einer anderen Empfangsempfindlichkeit empfangen, die somit auch eine andere Signalamplitude bewirken, die sich von den für den ersten Sender erwarteten Werten unterscheiden. So springt beispielsweise die Signalamplitude, wobei sich vorher eigentlich eine Abnahme der Signalamplitude gezeigt hatte. Daher kann hier zwischen mehreren Sendern unterschieden werden. Somit bezieht sich die Erfindung insgesamt auch auf eine Anordnung von der hier beschriebenen Vorrichtung und einer Laufbahn des Senders.

In einer weiteren Ausgestaltung werden aus den empfangenen Signalen Informationsdaten über den Sender ermittelt. Diese Ausgestaltung setzt darauf, dass beispielsweise RFID-Transponder auch Identifikationsdaten mit den Antwortsignalen aussenden. Diese Ausgestaltung erlaubt daher die Trennung zwischen den Signalen von unterschiedlichen Sendern, indem die Sender jeweils durch ihre eigenen Signale identifiziert werden.

Eine Ausgestaltung sieht es vor, dass die Vorrichtung einen Datenspeicher aufweist. Dabei ist die Datenverarbeitungsvorrichtung derartig ausgestaltet, Daten, die den zu unterschiedlichen Zeitpunkten empfangenen Signalen zugeordnet sind, in dem Datenspeicher zu hinterlegen. Weiterhin ist die Datenverarbeitungsvorrichtung derartig ausgestaltet, aus den in dem Datenspeicher hinterlegten Daten den Zeitpunkt zu ermitteln, zu dem der Sender sich in einem Detektionsbereich befindet und/oder einen Detektionsbereich passiert. Ein bereits angesprochenes Schema für den Verlauf der Signalamplituden ist: Abnahme der Amplitude, Erreichen eines Minimums, Zunahme der Amplitude. Dies für den Fall, dass nur ein Empfangsminimum betrachtet ist. Bei einer angenommenen konstanten Geschwindigkeit des Senders kann der Zeitpunkt der Passage ggf. auch extrapoliert werden.

Eine der ausgezeichneten Richtcharakteristiken verfügt über mehrere Empfindlichkeitsminima, die unterschiedlichen räumlichen Detektionsbereichen zugeordnet sind. Die Mehrzahl von Empfindlichkeitsminima ermöglicht, dass unterschiedliche Detektionsbereiche überwacht werden können. Damit lässt sich zum einen die Position des Senders genauer eingrenzen, d. h. ob er sich z. B. zwischen zwei Detektionsbereichen befindet. Weiterhin lassen sich auch die Aussagen über die Position des Senders verifizieren. Dies insbesondere im Zusammenhang mit der Auswertung von Signalen, die zu unterschiedlichen Zeitpunkten empfangen worden sind.

In einer Ausgestaltung weist die Vorrichtung eine Signalverarbeitungsvorrichtung auf. Dabei ist die Signalverarbeitungsvorrichtung derartig ausgestaltet, die von der Antennenvorrichtung empfangenen Signale zu verarbeiten und jeweils einen Amplitudenwert einer Feldstärke des empfangenen Signals zu ermitteln. Die Auswertung der empfangenen Signale lässt sich mit dieser Ausgestaltung vereinfachen, da jedem Signal nur ein Wert zugeordnet ist. Dabei ist die Datenverarbeitungsvorrichtung entsprechend ausgestaltet, die Amplitudenwerte der empfangenen Signale zu verarbeiten.

Eine Ausgestaltung sieht es vor, dass es sich bei der Signalverarbeitungsvorrichtung um eine RFID-Lesevorrichtung handelt, die als Amplitudenwert der Feldstärke der empfangenen Signale jeweils einen "Received Signal Strength Indication"-Wert erzeugt.

In einer alternativen oder ergänzenden Ausgestaltung werden von den empfangenen Signalen auch Daten ermittelt, die die Identifikation des Senders erlauben.

In einer Ausgestaltung weist die Vorrichtung eine Signalquelle auf, die derartig ausgestaltet ist, ein Anregungssignal zu erzeugen. Die Antennenvorrichtung ist derartig ausgestaltet, das Anregungssignal abzustrahlen. Die Signalquelle ist dabei in einer Ausgestaltung Teil der Signalverarbeitungsvorrichtung und ist in einer alternativen Ausgestaltung eine separate Komponente. In einer Ausgestaltung ist die Signalquelle insbesondere zugehörig zur Signalverarbeitungsvorrichtung, die als RFID-Lesegerät (oder RFID-Reader) ausgestaltet ist.

Eine Ausgestaltung sieht es vor, dass es sich bei dem Detektionsbereich um eine Ebene handelt. Der Detektionsbereich erstreckt sich in einer Ausgestaltung insbesondere nur über eine Ebene. Hierbei wird erkannt, ob der Sender eine Ebene passiert.

In einer Ausgestaltung ist die Antennenvorrichtung als Mehrkeulenantenne ausgestaltet. Eine Mehrkeulenantenne oder auch Multibeam-Antenne weist unterschiedliche Richtcharakteristiken auf, die jeweils durch eine Keule oder Hauptkeule gekennzeichnet sind. Diese Keulen sind zumindest teilweise unterschiedlich im Raum ausgerichtet, so dass auch unterschiedliche Raumbereiche mit unterschiedlichen Empfangsempfindlichkeiten vermessen werden.

Eine Ausgestaltung sieht es vor, dass die Antennenvorrichtung mehrere Antennenelemente aufweist. Die Antennenelemente sind in einer Ausgestaltung Komponenten einer Patchantenne und sind in einer alternativen Ausgestaltung einzelne Dipolantennen.

In einer Ausgestaltung weist die Antennenvorrichtung zwei Antennenelemente auf. Dabei ist die Steuervorrichtung derartig ausgestaltet, die zwei Antennenelemente abwechselnd im Gegentakt und im Gleichtakt zu schalten. Die zwei Antennenelemente sind in einer Ausgestaltung im Wesentlichen gleich ausgestaltet und haben daher auch gleiche Eigenschaften im Hinblick auf den Empfang von Signalen. Die unterschiedliche Speisung der Antennenelemente führt jeweils zu unterschiedlichen Richtcharakteristiken.

In einer Ausgestaltung ergibt sich bei einer Speisung der Antennenelemente im Gleichtakt ein Empfindlichkeitsmaximum in einer Ebene, die senkrecht auf einer Verbindungsachse zwischen den zwei Antennenelementen steht. Die Speisung im Gegentakt erzeugt eine Richtcharakteristik mit einem Minimum bzw. einer Nullstelle in der Ebene, die senkrecht auf der Verbindungsachse steht.

Daher ist es in einer Ausgestaltung vorgesehen, dass die Antennenelemente so angeordnet sind, dass die betroffene Ebene im Detektionsbereich liegt. Damit geht dann auch einher, dass die Richtcharakteristik, die sich aus der Speisung im Gegentakt ergibt, zugleich die ausgezeichnete Richtcharakteristik und dass die Richtcharakteristik, die sich bei der Speisung im Gleichtakt einstellt, die Vergleichsrichtcharakteristik ist.

Erfindungsgemäß ist vorgesehen, dass die Antennenvorrichtung ein Eigenmodenspeisenetzwerk aufweist. Dabei ist das Eigenmodenspeisenetzwerk derartig ausgestaltet, unterschiedliche Richtcharakteristiken der Antennenvorrichtung zu bewirken. Dies bezieht sich auf das Senden und das Empfangen von Signalen. Das Eigenmodenspeisenetzwerk ist in einer Ausgestaltung insbesondere so ausgestaltet, dass es zu jeder Richtcharakteristik das jeweils empfangene Signal ausgibt, insofern die Antennenvorrichtung mit mehreren Richtcharakteristiken gleichzeitig Signale empfängt.

Weiterhin löst die Erfindung die Aufgabe durch ein Verfahren zur Ermittlung einer Information über eine Position eines Senders gemäß Anspruch 9. Das Verfahren umfasst dabei zumindest den Empfang von Signalen, die von dem Sender ausgehen. Dies geschieht mit zwei ausgezeichneten Richtcharakteristiken einer Antennenvorrichtung. Dabei verfügen die ausgezeichneten Richtcharakteristiken über Empfindlichkeitsminima für das Empfangen von Signalen in jeweils einem Detektionsbereich.

Die Ausgestaltungen der Vorrichtungen lassen sich entsprechend auch durch das Verfahren realisieren, so dass die zugehörigen Ausführungen auch entsprechend gelten. Dies gilt auch umgekehrt, so dass sich das Verfahren auch durch die Vorrichtung realisieren lässt.

Die vorliegende Erfindung erlaubt je nach Ausgestaltung ein Verfahren zur Zuordnung eines Transponders zu einer festen Raumrichtung. Das Verfahren beruht in einer Ausgestaltung auf der Kombination einer Mehrkeulenantennen mit speziellen schaltbaren Richtcharakteristiken und einem RFID-Lesegerät, welches RSSI-Werte für identifizierte Transponder bereitstellt.

Im Einzelnen gibt es eine Vielzahl von Möglichkeiten, die erfindungsgemäße Vorrichtung und das erfindungsgemäße Verfahren auszugestalten und weiterzubilden. Dazu wird verwiesen einerseits auf die Patentansprüche, andererseits auf die folgende Beschreibung von Ausführungsbeispielen in Verbindung mit der Zeichnung. Es zeigen:

Fig. 1    eine schematische Darstellung einer erfindungsgemäßen Vorrichtung und deren Anwendung,

Fig. 2    eine schematische Darstellung von zwei Antennenelementen einer Antennenvorrichtung und der zugehörigen Richtcharakteristiken,

Fig. 3    ein Koordinatensystem für die Beschreibung der Antennenelemente der Fig. 2,

Fig. 4    eine Darstellung der Richtcharakteristiken, die sich bei den zwei Antennenelementen der Fig. 2 bei Gleich- und Gegentakt ergeben,

Fig. 5    eine schematische Darstellung der Bestimmung der Position eines Senders relativ zu der Antennenvorrichtung mit den Antennenelementen der Fig. 2,

Fig. 6    eine schematische Darstellung der Zeitverläufe der Amplituden der Empfangssignale bei der Anordnung der Fig. 5,

Fig. 7 die Zeitverläufe der Fig. 6 mit überlagertem Rauschen,

Fig. 8 eine Abhängigkeit der Standardabweichung $\sqrt{\text{Var}}$ ($\theta$) des geschätzten Einfallswinkels $\theta$ vom Signal-Rausch-Abstand $\rho$,

Fig. 9 eine schematische Darstellung einer nicht beanspruchten, dem Verständnis dienenden Vorrichtung,

Fig. 10 eine funktionale Darstellung eines Ringkopplers als Beispiel eines Speisenetzwerks,

Fig. 11 eine schematische Darstellung der Zeitverläufe der Amplituden der Empfangssignale bei der Verwendung von drei Antennenelementen mit drei Moden und

Fig. 12 eine Darstellung der Abhängigkeit der Standardabweichung des ermittelten Einfallswinkels $\theta$ vom Rauschen für eine Antennenvorrichtung mit drei Antennenelementen.

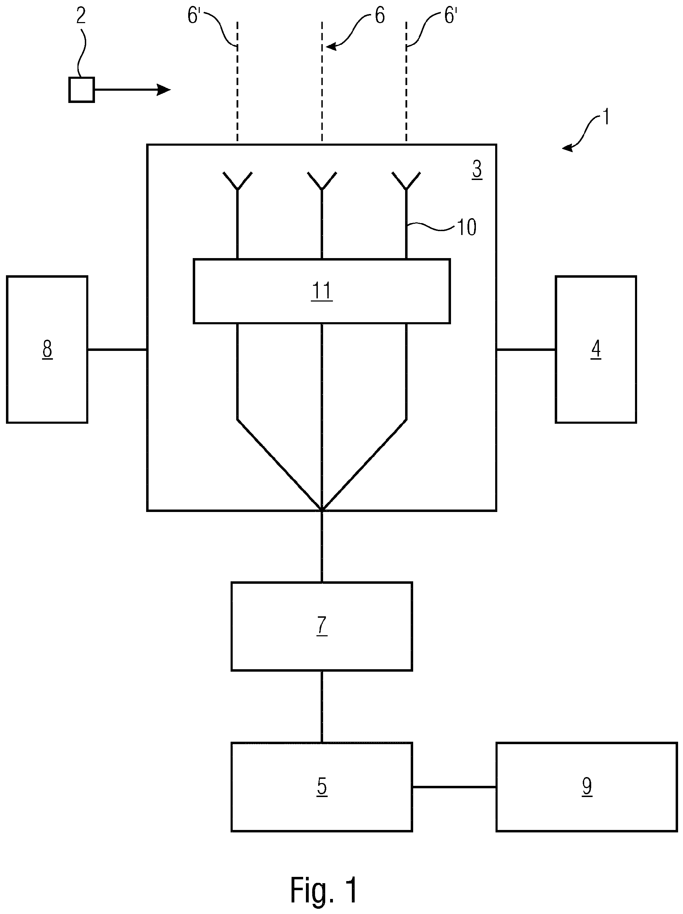

Die Fig. 1 zeigt eine Anwendung der erfindungsgemäßen Vorrichtung 1, die es u. a. erlaubt anzuzeigen, ob und wann ein Sender 2 einen Detektionsbereich 6 passiert.

Hierfür verfügt die Vorrichtung 1 über eine Antennenvorrichtung 3, die zumindest zwei ausgezeichnete Richtcharakteristiken aufweist. Die Richtcharakteristiken beziehen sich jeweils auf eine räumliche Verteilung der Empfindlichkeit der Antennenvorrichtung 3 für das Empfangen von Signalen, die hier insbesondere von dem Sender 2 ausgehen.

In der dargestellten Ausgestaltung weist die Antennenvorrichtung 3 mehrere Richtcharakteristiken auf. Hierfür dienen in der beispielhaften Ausgestaltung drei Antennenelemente 10, die von einer Steuervorrichtung 4 über das Netzwerk 11 gesteuert werden. Die Antennenvorrichtung 3 ist in einer Ausgestaltung eine Patch-Antenne. Alternativ handelt es sich bei den Antennenelementen 10 um Dipolantennen, Monopolantennen, monopol-artige Antennen, Chip-Antennen oder um Schleifenantennen. Eine der Richtcharakteristiken ist die bereits angesprochene ausgezeichnete Richtcharakteristik, der der Definitionsbereich 6 zugeordnet ist.

Für das Schalten der unterschiedlichen Richtcharakteristiken zum Aussenden eines Anregungssignals bzw. zum Empfangen der vom Sender 2 ausgehenden Signale ist das Speisenetzwerk 11 vorgesehen. Das Speisenetzwerk 11 stellt in dem Beispiel eine Realisierung einer Butler-Matrix (in einer erfindungsgemäßen Ausgestaltung wird ein Eigenmodennetzwerk verwendet) dar und stellt an seinem Ausgang die Signale zur Verfügung, wie sie mit den einzelnen Richtcharakteristiken empfangen worden sind. Das Schalten der Richtcharakteristiken bedeutet daher, dass das Signal, das mit der geschalteten Richtcharakteristik empfangen worden ist, der Auswertung zugeführt bzw. besonders ausgewertet wird. In einer weiteren - nicht dargestellten - Ausgestaltung bedeutet das Schalten der Richtcharakteristiken, dass durch einen direkten Eingriff auf die Antennenvorrichtung 3 jeweils nur die geschaltete Richtcharakteristik vorhanden ist, d. h. dass die Antennenvorrichtung 3 nur mit der geschalteten Richtcharakteristik Signale empfangen kann.

Die Verarbeitung der empfangenen Signale bzw. der sich damit ergebenden Daten erfolgt durch die Datenverarbeitungsvorrichtung 5. Im gezeigten Beispiel ist die Datenverarbeitungsvorrichtung 5 mit einer Signalverarbeitungsvorrichtung 7 verbunden, die für die empfangenen Signale jeweils einen Amplitudenwert der Feldstärke ermittelt.

Insofern es sich bei dem Sender 2 um einen RFID-Tag handelt, ist entsprechend die Signalverarbeitungsvorrichtung 7 derartig ausgestaltet, dass sie als Amplitudenwert einen sogenannten "Received Signal Strength Indication" (RSSI)-Wert erzeugt. In einer weiteren damit einhergehenden Ausgestaltung ist die Signalverarbeitungsvorrichtung 7 auch dafür ausgestaltet, Informationen aus den empfangenen Signalen - z. B. ein Identifikationskennzeichen oder Messdaten - zu extrahieren. Es handelt sich somit bei der Signalverarbeitungsvorrichtung 7 beispielhaft um einen RFID-Reader bzw. ein RFID-Lesegerät.

In einer - nicht dargestellten - Ausgestaltung ermittelt die Datenverarbeitungsvorrichtung 5 selbst einen Wert für die Amplitude der empfangenen Signale. Insbesondere in Verbindung mit dieser Ausgestaltung, jedoch auch davon unabhängig, ist in einer Ausgestaltung die Datenverarbeitungsvorrichtung 5 ein Bestandteil der Antennenvorrichtung 3 und ist daher in dieser untergebracht.

Für die Anwendung bei Sendern 2 aufgrund von RFID-Tags ist zudem bei dem gezeigten Ausführungsbeispiel eine Signalquelle 8 vorhanden, die Anregungssignale erzeugt. Die Anregungssignale werden - je nach Anwendungsfall mit einzelnen Richtcharakteristiken oder im Wesentlichen ungerichtet - über die Antennenvorrichtung 3 ausgegeben. Die Anregungssignale sind dabei beispielsweise sogenannte request-Signale, über die der Sender 2 in Form eines RFID-Tags um den Aufbau einer Datenkommunikation gebeten wird und über die der Sender 2 ggf. die für die Kommunikation erforderliche Energie erhält. Für das Aussenden der Anregungssignale werden in einer Ausgestaltung Richtcharakteristiken kombiniert, so dass sich Überlagerungen für das Aussenden der Signale ergeben. Umgekehrt erlaubt das Speisenetzwerk 11 - wie bereits angesprochen - bei den empfangenen Signalen die Trennung in die einzelnen Richtcharakteristiken.

In einer alternativen - nicht dargestellten - Ausgestaltung ist die Signalquelle 8 ein Bestandteil der Signalverarbeitungsvorrichtung 7. Dies entspricht der im Stand der Technik üblichen Ausgestaltung von RFID-Readern, die selbst die Aktivierungssignale erzeugen. Indem die Antennenvorrichtung 3 zum Empfangen und Senden von Signalen dient, ergibt sich daraus auch, dass die Richtcharakteristiken sich nicht nur auf die räumliche Verteilung der Empfindlichkeit, sondern auch auf die Sendeeigenschaften der Antennenvorrichtung 3 bezieht.

Schließlich ist die Datenverarbeitungsvorrichtung 5 mit einem Datenspeicher 9 verbunden, um dort Daten über die Trajektorie des Senders 2 abzulegen. Mit den Historiendaten bezüglich der jeweils ermittelten Positionen des Senders 2 wird die Bewegungsbahn des Senders 2 ermittelt und werden beispielsweise auch bei der Anwesenheit von mehreren Sendern Mehrdeutigkeiten aufgehoben und die Signale den Sendern zugeordnet. Hierfür sind entsprechende Plausibilitätsbetrachtungen vorgesehen.

Die ausgesuchte Richtcharakteristik verfügt hier über einen Detektionsbereich 6, senkrecht zu dem sich in dem gezeigten Beispiel der Sender 2 bewegt. Dabei bewegt sich hier der Sender 2 parallel zu den Antennenelementen 10 und senkrecht zu dem Detektionsbereich 6. Die Besonderheit des Detektionsbereichs 6 liegt darin, dass die Empfindlichkeit der Antennenvorrichtung 3 in diesem räumlichen Bereich minimal ist. Bei der Vorrichtung 1 wird somit ein Signalminimum verwendet, um festzustellen, ob der Sender 2 den zugeordneten Detektionsbereich 6 passiert. Im Detektionsbereich 6 wird somit, wenn sich der Sender 2 an diesem Ort befindet, kein oder nur ein sehr schwaches Signal durch die Antennenvorrichtung 3 empfangen.

Die Antennenvorrichtung 3 verfügt erfindungsgemäß über insgesamt drei Detektionsbereiche 6, 6', in denen sich jeweils ein Empfangsminimum befindet und die der Sender 2 nacheinander passiert. Hierdurch kann die Zuverlässigkeit der Detektion der Passage des mittleren Detektionsbereichs 6 erhöht werden.

Die Zuverlässigkeit der Messung wird insbesondere dadurch erhöht, dass die Steuervorrichtung 4 unterschiedliche Richtcharakteristiken einstellt, die jeweils unterschiedliche Empfindlichkeiten und Ortszuordnungen aufweisen, so dass auch Messungenauigkeiten oder Mehrdeutigkeiten kompensiert werden können.

In einer Ausgestaltung verfügt die Antennenvorrichtung 3 über mindestens eine weitere Richtcharakteristik, die im Detektionsbereich 6 ein Empfindlichkeitsmaximum aufweist. D. h. die Antennenvorrichtung 3 ist mit dieser anderen Richtcharakteristik gerade sehr empfindlich für das Empfangen von Signalen. Daher werden in dieser Ausgestaltung die Signale der ausgezeichneten Richtcharakteristik und der Vergleichscharakteristik gemeinsam ausgewertet, um die Messgenauigkeit zu erhöhen.

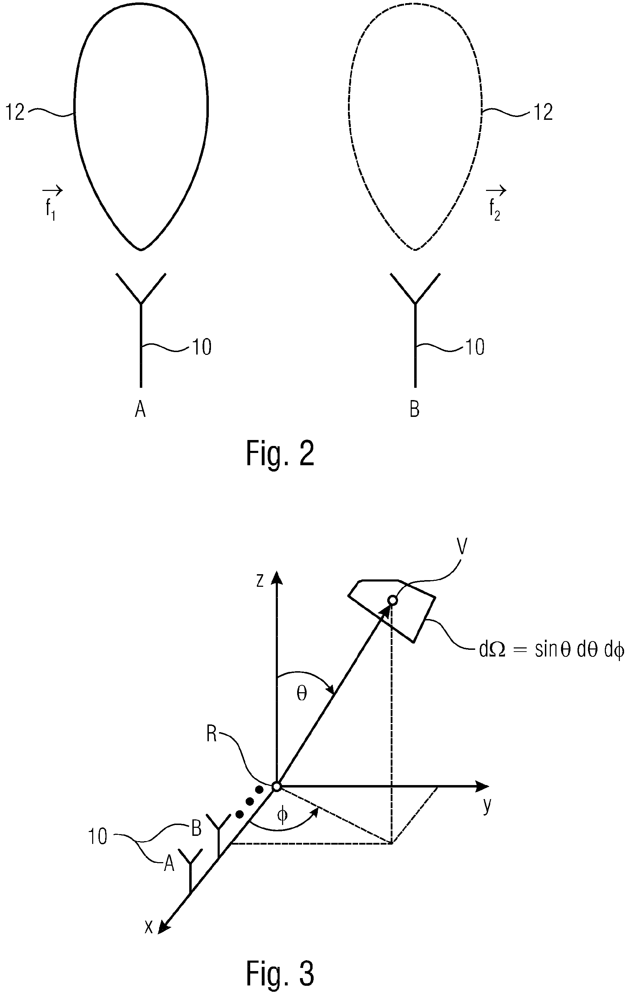

Die Fig. 2 zeigt die zwei Antennenelemente 10 (bezeichnet mit A und B) eine beispielhaften Antennenvorrichtung, die als Mehrkeulenantenne ausgestaltet ist. Die beiden Antennenelemente 10 verfügen jeweils über eine keulenförmige Richtcharakteristik 12. Die beiden Richtcharakteristiken 12 werden jeweils durch eine komplexwertige Richtcharakteristik $\vec{f}_j$ mit j = 1 (oder A) bzw. j = 2 (oder B) beschrieben.

Allgemein besteht eine Mehrkeulenantenne aus einer Menge von n Antennenelementen 10 (oder Strahlern, z. B. Dipole), die an ein Speisenetzwerk (siehe Fig. 1) angeschlossen sind. An jedem der n Ausgänge des Speisenetzwerks ist eine Antenne bzw. ein Antennenelement angeschlossen.

Die m Eingänge des Speisenetzwerks, die jeweils die Ausgabe der von den Antennenelementen 10 empfangenen Signale bzw. dem Einspeisen der über die Antennenelemente 10 auszusendenden HF-Signale dienen, korrespondieren in einer Ausgestaltung jeweils mit einer bestimmten Richtcharakteristik $\vec{C}_i$, die definiert ist als:

$$\vec{C}_i = \vec{C}_i(\vec{\omega}) = \vec{C}_i(\phi, \theta) = \begin{pmatrix} C_i^{(\text{co})} \\ C_i^{(\text{cross})} \end{pmatrix} \quad \text{mit } i = 1, \dots m \qquad (1)$$

Dabei sind jeweils eine co-polarisierte Komponente $C_i^{(\text{co})}$ und eine kreuzpolarisierte Komponente $C_i^{(\text{cross})}$ gegeben.

Die Fig. 3 zeigt ein Koordinatensystem mit den drei Achsen x, y und z sowie dem Referenzpunkt R im Ursprung des Koordinatensystems. Die zwei Antennenelemente 10 (A und B) sind im dargestellten Beispiel entlang der x-Achse angeordnet. Beschrieben wird dabei ein Beobachtungspunkt V durch einen Azimutwinkel $\Phi$ in der x-y-Ebene sowie einen Co-Elevations-Winkel $\theta$ relativ zur z-Achse. Betrachtet sei dabei eine Fläche $d\Omega = \sin\theta * d\theta * d\Phi$.

Für die Zuordnung eines Senders oder beispielsweise speziell eines RFID-Transponders zu einer bestimmten Richtung weisen die Richtcharakteristiken $\vec{C}_i$ der Antennenvorrichtung besondere Eigenschaften auf. Hier sei weiter das zwei-elementige Antennen-Array der Fig. 2 betrachtet.

Bezogen auf den Referenzpunkt R gemäß der Fig. 3, in den aus Gründen der Einfachheit der Koordinatenursprung gelegt wird, besitzen beide Antennenelemente 10 (also A und B) jeweils die angesprochene (komplexe) Strahlungscharakteristik

$$\vec{f_j} = \begin{pmatrix} f_j^{(\mathrm{co})} \\ f_j^{(\mathrm{cross})} \end{pmatrix} \quad \text{mit } j = 1, \ldots\ n \tag{2}$$

Daraus lässt sich die sogenannte Strahlungsmatrix $\tilde{H}$ (vergleiche [3]) ermitteln, deren Komponenten durch folgende Formel gegeben sind:

$$\tilde{H}_{pj} = \frac{1}{4\,\pi} \int_\Omega \vec{f_p}^{\mathrm{H}} \vec{f_j}\ \mathrm{d}\Omega \quad \text{mit}\ \{p,j\} = 1, \ldots, n \tag{3}$$

Da die Strahlungsmatrix $\tilde{H}$ eine hermitesche Matrix ist, kann sie diagonalisiert werden. Daher ergibt sich:

$$\tilde{H} = \tilde{Q}\ \tilde{\Lambda}\ \tilde{Q}^{\mathrm{H}} \quad \text{mit}\ \tilde{\Lambda} = \mathrm{diag}\{\lambda_1, \ldots, \lambda_n\} \tag{4}$$

Die Gleichung (4) beschreibt die Eigenwertzerlegung der Strahlungsmatrix $H$. Dabei repräsentiert jede Spalte in $\overline{Q}$ einen der n Eigenvektoren $\vec{q_j}$ und jedes Hauptdiagonalelement in $\vec{\Lambda}$ beschreibt den zugehörigen Eigenwert $\lambda_j$.

Die Eigenvektoren $\vec{q_j}$ beschreiben die fundamentalen Anregungsvektoren der Antennenvorrichtung, die hier ein Antennen-Array mit den Antennenelementen ist. Die Eigenvektoren $\vec{q_j}$ sind paarweise orthogonal, sofern keine Eigenwerte $\lambda_j$ mehrfach auftreten. Kommen Eigenwerte $\lambda_j$ mehrfach vor, so muss eine orthonomale Basis zu diesen gefunden werden, deren Basisvektoren zueinander orthogonal sind.

Zudem besitzen die Eigenvektoren $\vec{q_j}$ eine Länge von Eins. Mit den Eigenvektoren gehen bestimmte Richtcharakteristiken

$$\vec{C_j}^{(\mathrm{m})} = \begin{pmatrix} C_j^{(\mathrm{m,\ co})} \\ C_j^{(\mathrm{m,\ cross})} \end{pmatrix} \tag{5}$$

einher, die zueinander orthogonal sind.

Es gilt also:

$$\oint \left( \vec{C_p}^{(\mathrm{m})} \right)^{\mathrm{H}} \vec{C_j}^{(\mathrm{m})} = 0 \quad \text{, falls } p \neq j. \tag{6}$$

Die Eigenvektoren $\overline{Q}$ stellen eine spezielle orthonormale Basis der möglichen Speisevektoren da. Abweichend von den beanspruchten Erfindungen können jedoch auch andere orthonormale Basen ermittelt werden, so dass das Speisenetzwerk nicht zwangsläufig ein Eigenmodennetzwerk sein muss. Erforderlich ist, dass sich wenigstens eine Nullstelle in einer der Richtcharakteristiken entlang einer bestimmten Richtung ausprägt.

Für ein Array aus zwei gleichen Antennenelementen (siehe Fig. 2) mit gleicher Ausrichtung ergeben sich folgende Eigenvektoren:

$$\tilde{Q} = \frac{1}{\sqrt{2}} \begin{pmatrix} 1 & 1 \\ 1 & -1 \end{pmatrix}$$

$$(7)$$

Die Antennenelemente 10 (beispielsweise Dipole) werden also entweder im Gleichtakt ("even mode": $1/\sqrt{2}$ und $1/\sqrt{2}$) oder im Gegentakt ("odd mode": $1/\sqrt{2}$ und $-1/\sqrt{2}$) gespeist.

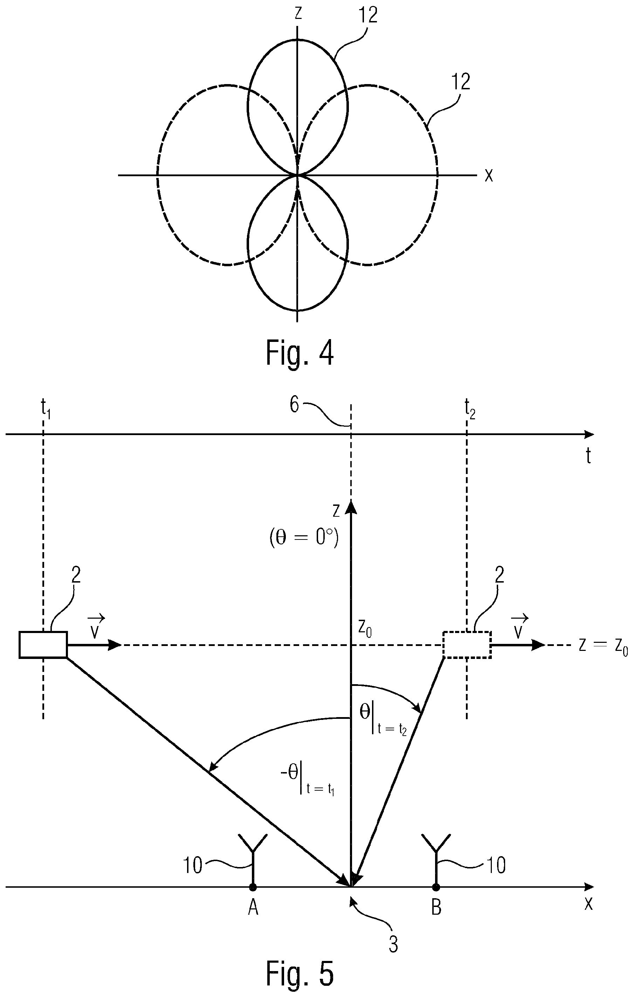

Die sich daraus ergebenden betragsmäßigen Richtcharakteristiken zeigt die Fig. 4 qualitativ für die x-z-Ebene. Die Richtcharakteristik 12 für den Gleichtakt ist dabei mit durchgezogenen Linien und die für den Gegentakt mit durchbrochenen Linien dargestellt. Die dargestellten Richtcharakteristiken ergeben sich insbesondere durch ein Eigenmodennetzwerk.

Bei Speisung im Gleichtakt ergibt sich ein Maximum senkrecht zum Array, das aus den zwei gleichen und gleich ausgerichteten Antennenelementen gebildet wird. Das Maximum liegt also in z-Richtung bzw. beim Co-Elevations-Winkel $\theta = 0°$.

Im Gegentakt hingegen entsteht ein Minimum bzw. eine Nullstelle an dieser Stelle. Die Nullstelle bzw. deren nähere Umgebung ist schmal gegenüber der Umgebung um das Maximum im Gleichtakt, da der Gradient bezüglich des Co-Elevations-Winkels $\theta$ in der Umgebung der Nullstelle betragsmäßig stark ansteigt.

Ein Funksignal, das aus Richtung der Nullstelle auf das Array der Antennenvorrichtung trifft, wird im Gegentakt daher kaum oder gar nicht empfangen, während im Gleichtakt das Empfangssignal maximal wird. Aus den gemessenen Signalpegeln im Gleich- und Gegentakt kann daher auf die Einfallsrichtung geschlossen werden.

In der Fig. 5 ist ein Szenario gezeigt, bei dem ein Objekt mit einem RFID-Transponder als Sender 2 parallel zur x-Achse mit konstanter Geschwindigkeit (v) befördert wird. Das Antennen-Array, das aus den zwei Antennenelementen 10 der Antennenvorrichtung 3 gebildet wird, ist im Ursprung des Koordinatensystems zentriert und ist so ausgerichtet, dass die Nullstelle der Empfangsempfindlichkeit im Gegentakt-Mode entlang der z-Achse $\theta = 0°$ auftritt. Diese Nullstelle ist damit der Detektionsbereich 6. In Abhängigkeit von der Position des Transponders 2 relativ zur Antennenvorrichtung 3 variiert das Empfangssignal der einzelnen Moden, da der Einfallswinkel eine Funktion der Zeit ist.

Der Position des Transponder in x-Richtung kann eine Zeit t zugeordnet werden. Dargestellt sind die zwei Positionen des Senders 2 zum Zeitpunkt t1 und damit vor dem Detektionsbereich 6 sowie zum Zeitpunkt t2 und damit nach der Passage des Detektionsbereichs 6. Der jeweilige Einfallswinkel $\theta$ als Winkel des einfallenden Antwortsignals (angedeutet durch die Pfeile, ausgehend vom Sender 2) zur z-Achse variiert somit mit der Zeit t.

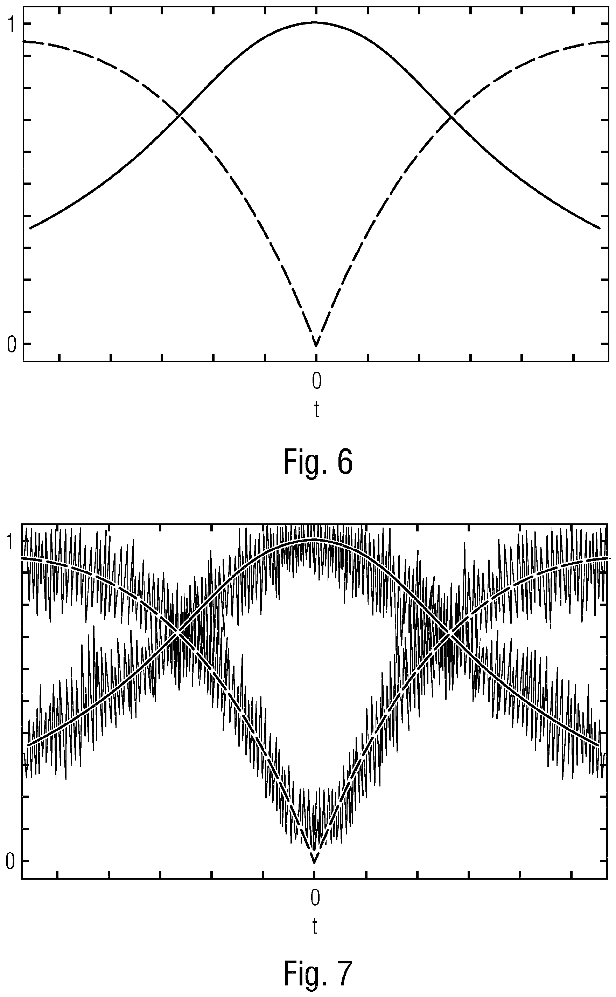

In der Fig. 6 sind die Zeitsignale der Anordnung der Fig. 5 beispielhaft dargestellt. Gezeigt ist der Verlauf der Empfangsamplitude normiert auf das Maximum als Funktion der Zeit t für den Sender der Fig. 5, der sich parallel zur x-Achse ($z = z_0$) mit konstanter Geschwindigkeit v bewegt. Die zwei Antennenelemente befinden sich auf der x-Achse und sind um den Koordinatenursprung zentriert, haben also gleichen Abstand dazu.

Wird der Transponder als Sender an verschiedenen Stellen und somit zu verschiedenen Zeitpunkten ausgelesen (das bedeutet, dass der Transponder identifiziert wurde und seine Kennung bekannt ist), so erlaubt es eine Analyse der Zeitsignale, den Zeitpunkt zu bestimmen, an dem sich der Transponder in Richtung $\theta = 0°$ und somit an einer bestimmten Stelle - nämlich des Detektionsbereichs - entlang des Förderweges befindet.

Das Empfangssignal im Gegentakt (unterbrochene Linie) ist zu diesem Zeitpunkt der Passage des Detektionsbereichs minimal, während es im Gleichtakt (durchgezogene Linie) maximal ist. Der Transponder kann somit von einem nachfolgenden Transponder, der ebenfalls ausgelesen wird, zu diesem Zeitpunkt der Passage des Detektionsbereichs unterschieden werden, da das Signal des nachfolgenden Transponders sowohl im Gleichals auch im Gegentakt empfangen wird. Beim Transponder, der somit aus der Richtung $\theta = 0°$ antwortet und dessen Signal nur im Gleichtakt empfangbar ist, muss es sich demnach um den ausgesuchten Transponder handeln. Dieses Ergebnis kann genutzt werden, um den Fluss der Objekte beispielsweise auf einem Förderband oder an einer Tordurchfahrt zu kontrollieren und zu steuern.

Der Zeitpunkt, an dem sich der Transponder entlang der Ebene mit Co-Elevations-Winkel $\theta = 0°$ befindet, lässt sich alternativ auch aus dem Gleichtakt-Mode ablesen. An dieser Stelle wird das von dem Sender ausgesendete Signal mit maximaler Amplitude empfangen.

Für die praktische Umsetzung sind jedoch die Unsicherheiten durch überlagertes Rauschen zu berücksichtigen. Die Fig. 7 illustriert den Zeitverlauf der Empfangssignale der Fig. 6 im Gleichtakt (durchgezogene Linie) und im Gegentakt (durchbrochene Linie) mit überlagertem Rauschen ausgehend von einem Signal-Rausch-Abstand von $\rho = 20$ dB.

Aufgrund der breiten Strahlungskeule im Gleichtakt wirkt sich das Rauschen stärker auf das Signal-Maximum im Detektionsbereich aus, so dass bei der Suche nach dem Maximum auch eine größere Unsicherheit auftritt. Durch das relativ schmale Minimum beim Gegentakt lässt sich dieses auch beim überlagerten Rauschen mit geringerer Unsicherheit auffinden.

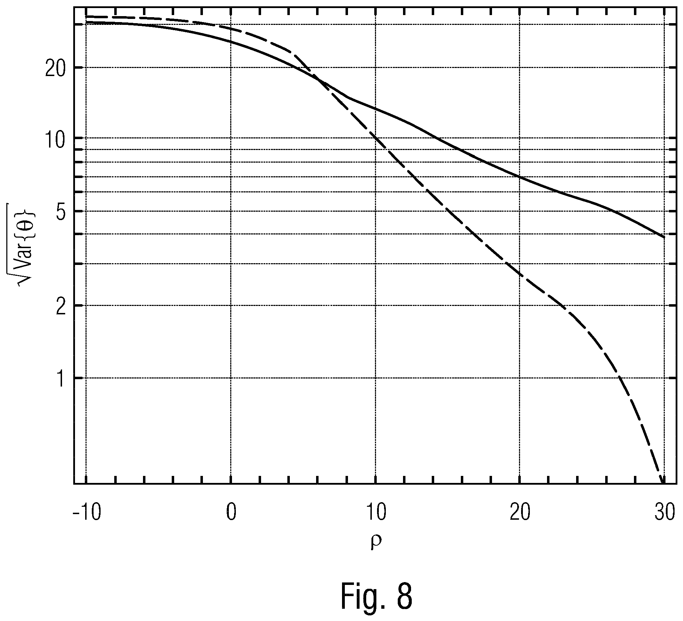

Um dies zu verdeutlichen, zeigt die Fig. 8 exemplarisch die ermittelte Standardabweichung des ermittelten Einfallswinkels $\theta$ für variierende Signal-Rausch-Abstände für den Aufbau gemäß der Fig. 5. Mit zunehmendem Signal-Rausch-Abstand $\rho$ (dargestellt auf der x-Achse in dB) verringert sich die Unsicherheit bei der Minimumsuche im Gegentakt (durchbrochene Linie) schnell, während die Maximumsuche im Gleichtakt (durchgezogene Linie) auch bei hohen Signal-Rausch-Abständen $\rho$ deutlich mehr Unsicherheiten zeigt. Dabei ist auf der y-Achse die Standardabweichung $\sqrt{\text{Var}}\,(\theta)$ des geschätzten Einfallswinkels $\theta$ in Grad (°) aufgetragen. Der Transponder bewegt sich dabei für das Beispiel mit einer konstanten Geschwindigkeit von 3 m/s. Die Standardabweichung wurde über 10 000 Testwerte pro Signal-Rausch-Abstand-Wert $\rho$ ermittelt. Dabei beträgt $z_0 = 5$ m.

Die Umsetzung des Prinzips der Gleichtakt- und Gegentaktspeisung beruht auf einem Speisenetzwerk, das die erforderlichen Speisevektoren bereitstellt. Die den Eingangstoren zugeordneten Richtcharakteristiken $\vec{C}_i$ gemäß Gleichung (1) entsprechen somit den Richtcharakteristiken der Eigenmoden $\vec{C}_j^{(\mathrm{m})}$ und beim Speisenetzwerk handelt es sich um ein Eigenmodennetzwerk, wobei in der Ausgestaltung m = n gilt. Das bedeutet, dass pro Antennenelement 10 auch ein Signalausgang zur Ausgabe der jeweils empfangenen Signale zur Verfügung steht.

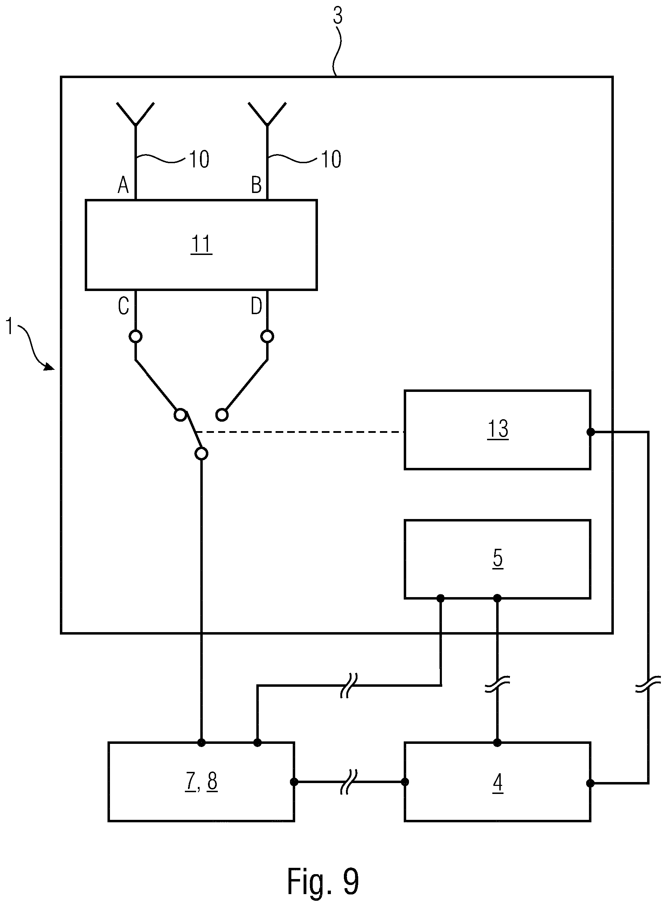

Eine nicht beanspruchte, dem Verständnis dienende Vorrichtung 1 mit zwei Antennenelementen 10 zeigt die Fig. 9. Das Antennen-Array der zwei Antennenelemente 10 (bezeichnet mit A und B) ist an ein Eigenmodennetzwerk als Speisenetzwerk 11 angeschlossen. Die Eingänge (bezeichnet mit C und D) des Speisenetzwerks 11 sind über einen Schalter für hochfrequente Signale (HF-Schalter) wählbar. Der Eingang des Schalters ist mit dem RFID-Lesegerät, das hier als Signalverarbeitungsvorrichtung 7 dient, verbunden. Dabei beinhaltet hier das RFID-Lesegerät auch die Signalquelle 8, so dass das RFID-Lesegerät das Anregungssignal für die Transponder bereitstellt und deren Antwortsignale auswertet. Das Umschalten der Eingänge des Speisenetzwerk 11 erfolgt über eine Steuerlogik 13, die hier ein Teil der Antennenvorrichtung 3 ist. Die Eingänge C und D des Speisenetzwerks 11 sind die Eingänge für das HF-Signal als Anregungssignal der Signalverarbeitungsvorrichtung 7. Zudem sind sie die Ausgänge für die mit den Antennenelementen 10 empfangenen Signale. Dabei ist jedem Eingang auch eine Richtcharakteristik, d. h. entweder Gegentakt oder Gleichtakt zugeordnet, so dass der Schalter den Wechsel zwischen den beiden Richtcharakteristiken erlaubt.

Das Auslesen der Transponder und daher das Empfangen der Signale wird über eine Steuervorrichtung 4 kontrolliert, die auf die Steuerlogik 13 einwirkt. Die Transponder-Signale werden in der gezeigten Ausgestaltung alternierend im Gleichtakt und im Gegentakt ausgelesen. Mit den durch das RFID-Lesegerät 7 zur Verfügung stehenden RSSI-Werten als Werte für die Amplitude der empfangenen Signale können für jeden Transponder die zugeordneten Zeitsignale des Gleichtakt-Mode und des Gegentakt-Mode ermittelt werden. Davon ausgehend erfolgt in der Datenverarbeitungsvorrichtung 5 die Ermittlung des Zeitpunkts, an dem der jeweilige Transponder die z-Achse $\theta = 0°$ durchquert. In einer Ausgestaltung ermittelt die Datenverarbeitungsvorrichtung 5 insbesondere den Einfallwinkel der empfangenen Signale.

Die Datenverarbeitungsvorrichtung 5 ist hier ebenfalls eine Komponente der Antennenvorrichtung 3. In einer weiteren - hier nicht dargestellten - Ausgestaltung ist auch die Steuervorrichtung 4 ein Teil der Antennenvorrichtung 3, so dass die Vorrichtung 1 in dieser Ausgestaltung insgesamt aus zwei Elementen besteht: Antennenvorrichtung 3 und RFID-Lesegerät 7.

Die Trennung in Steuerlogik 13, Steuervorrichtung 4 und Datenverarbeitungsvorrichtung 5 ist hier in Bezug auf ihre Funktionen zu verstehen. Für die Realisierung lassen sich unterschiedliche Ausgestaltungen implementieren.

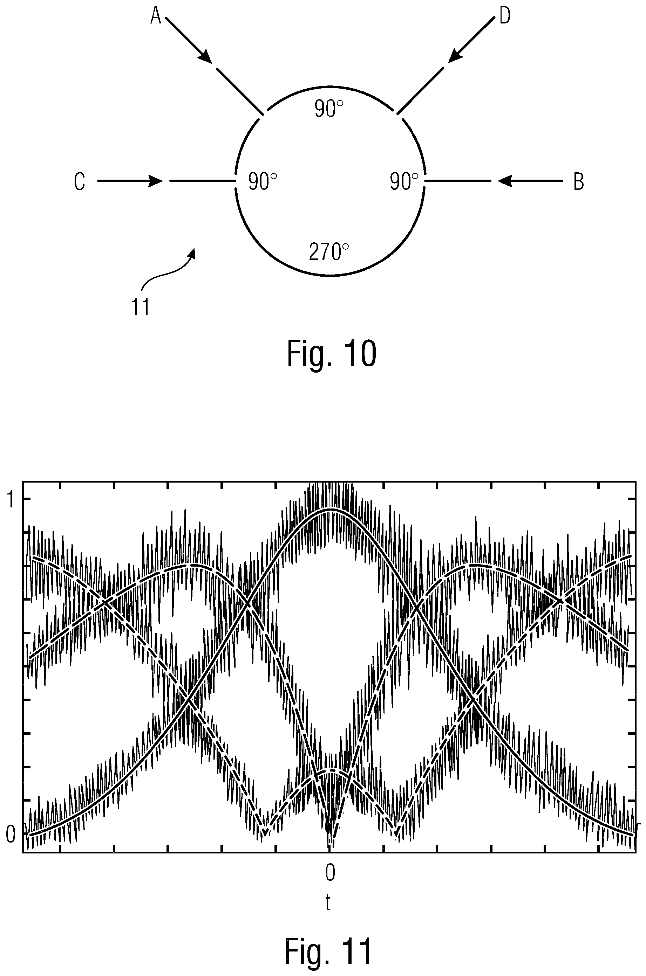

Eine lediglich der Erklärung dienende, jedoch nicht beanspruchte Implementierung eines Eigenmoden-Netzwerks als Speisenetzwerk 11 zeigt die Fig. 10 für das aus zwei Antennenelementen (Antenne A und Antenne B) bestehende Antennen-Array der Fig. 2. Es handelt sich in der Ausgestaltung um einen Ringkoppler, der abhängig vom gespeisten Tor (also dem jeweiligen Eingang des Speisenetzwerks in Richtung des RFID-Lesegeräts gemäß Fig. 9, hier bezeichnet mit C für Gegentakteingang und D für Gleichtakteingang) ein Gleichtaktsignal bzw. ein Gegentaktsignal zur Verfügung stellt. Ein solcher Ringkoppler findet insbesondere Verwendung, wenn ein Eigenmodennetzwerk realisiert ist.

Das Prinzip der Eigenmodenspeisung lässt sich auf Arrays mit beliebiger Anzahl an Antennen-Elementen anwenden:
Die Fig. 11 zeigt exemplarisch die Signale einer erfindungsgemäßen Antennenvorrichtung, die drei Antennenelemente aufweist (vgl. Fig. 1). Die drei Antennenelemente befinden sich auf der x-Achse und sind um den Koordinatenursprung zentriert. Es zeigen sich drei Moden. Die Zeitsignale (Zeit t auf der x-Achse, wobei t = 0 der Zeitpunkt des Passierens des Detektionsbereichs ist, und mit der Empfangsamplitude normiert auf das Maximum auf der y-Achse) sind hier mit überlagertem Rauschen dargestellt. Das Signalrauschverhältnis beträgt $\rho = 20$ dB.

Im Gleichtakt-Mode (durchgezogene Linie) werden alle drei Antennenelemente gleichphasig gespeist. Die korrespondierende Richtcharakteristik weist somit ein Maximum entlang des Winkels $\theta = 0°$ auf, das zu beiden Seiten hin abfällt.

Im Gegentakt-Mode (gestrichelte Linie mit längeren Teilstrichen) werden die beiden äußeren Elemente gegenphasig und mit gleicher Amplitude gespeist. Dabei entsteht entlang der Achse mit Winkel $\theta = 0°$ ein Minimum bzw. eine Nullstelle, das seitlich zu einem Maximum, das kleiner als das Maximum der Gleichtakt-Mode ist, ansteigt und dann wiederum jeweils abfällt.

Im dritten Mode (gestrichelte Linie mit kürzeren Teilstrichen) sind jeweils benachbarte Elemente gegenphasig gespeist. Dadurch entstehen symmetrisch um die z-Achse zwei Nullstellen im Strahlungsdiagramm mit einem kleinen Maximum um den Bereich mit Winkel $\theta = 0°$ herum. Die beiden Nullstellen steigen seitlich wieder an.

Die Betrachtung beschränkt sich dabei auf die obere Halbebene $z \geq 0$.

Mit Hilfe der zwei zusätzlichen Nullstellen des dritten Mode kann bei überlagertem Rauschen gegenüber dem zwei-elementigen Array eine genauere Bestimmung des Zeitpunktes erfolgen, an dem ein Transponder die z-Achse passiert. Aus Plausibilitätsgründen muss der geschätzte Zeitpunkt des Minimums im Gegentaktsignal zwischen den Zeitpunkten für die Minima im Signal des dritten Mode auftreten.

Außerdem ist beim drei-elementigen Array die Nullstelle im Gegentakt-Mode aufgrund der größeren Apertur schärfer als beim zwei-elementigen Array, wobei ein gleicher Abstand zwischen den Antennenelementen vorausgesetzt wird.

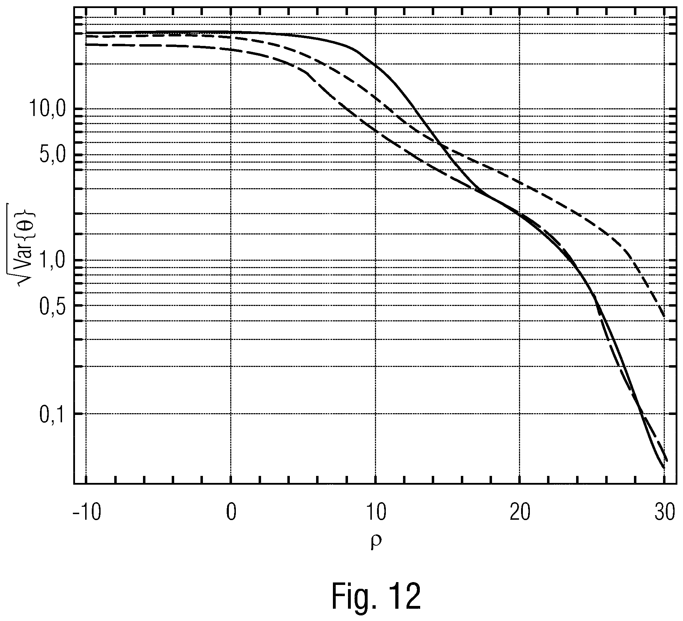

Die Fig. 12 zeigt die Standardabweichung $\sqrt{\mathrm{Var}\{\theta\}}$ des geschätzten Einfallswinkels $\theta$ als Funktion des Signal-Rausch-Abstands $\rho$, der ermittelt worden ist anhand der Signale im Gegentakt-Mode (durchgezogene Linie) und anhand der Signale im Gegentakt-Mode und dem dritten Mode (durchbrochene dicke Linie). Zum Vergleich ist das Ergebnis für den Gegentakt-Mode des zwei-elementigen Arrays aufgetragen (durchbrochene dünne Linie, vgl. Fig. 8).

Der Transponder bewegt sich dabei für die ermittelten Werte parallel zur x-Achse ($z = z_0$) mit konstanter Geschwindigkeit v = 3 m/s. Die Antennenelemente befinden sich auf der x-Achse und sind um den Koordinatenursprung zentriert. Die Standardabweichung wurde über 10 000 Testwerte pro $\rho$-Wert ermittelt. Weiterhin war $z_0 = 5$ m.

Der Vergleich der Varianzen zwischen einem zwei-elementigen und einem drei-elementigen Array zeigt, dass die Kombination aus Gegentakt-Mode und dritter Mode eine geringere Standardabweichung aufweist als der Gegentakt-Mode des zwei-elementigen Array.

Der Gegentakt-Mode des drei-elementigen Array führt bei Signal-Rausch-Verhältnissen von weniger als 13 dB zu höheren Standardabweichungen als der Gegentakt-Mode des zwei-elementigen Array. Beim drei-elementigen Array nähert sich mit zunehmenden Wert für $\rho$ die Standardabweichung des Gegentakt-Mode an die Standardabweichung an, die sich aus der Kombination von Gegentakt-Mode und dritter Mode ergibt. Dies folgt, da die Unsicherheit beim Schätzen des Einfallswinkels und somit die Streuung um den Erwartungswert abnimmt. Es wird immer unwahrscheinlicher, dass das Minimum im Zeitsignal des Gegentakt-Mode nicht zwischen den Minima der dritten Mode auftritt.

Die Erfindung sei anhand einer Ausgestaltung noch einmal zusammengefasst: Es erfolgt die Detektion eines Transponders als Sender basierend auf der Minimumsuche im Zeitsignal wenigstens eines Empfangs-Mode einer Mehrkeulenantenne.

Wird ein RFID-Lesegerät verwendet, das RSSI-Werte für die empfangenen Signale bereitstellt, so ergeben sich folgende Vorteile:

Unter Zuhilfenahme einer Rechenvorrichtung, die in der Mehrkeulenantenne beherbergt sein kann, ist ein einzelner HF-Pfad zwischen Mehrkeulenantenne und RFID-Lesegerät ausreichend für die Detektion eines Transponder in einer bestimmten Richtung. Dies erlaubt es, auch RFID-Lesegeräte zu nutzen, die nur ein Tor als Ausgang bzw. Eingang aufweisen. Diese sind kostengünstiger als RFID-Lesegeräte mit mehreren Toren.

Zudem ergibt sich der Vorteil, dass keine zusätzlichen Infrastrukturkomponenten zur Umschaltung oder zur Berechnung erforderlich sind, da in dieser Ausgestaltung das Umschalten sowie die Positionsbestimmung funktional durch die Mehrkeulenantenne selbst abgedeckt werden.

Die Anzahl der Antennenelemente und somit die Anzahl der Eigenmoden kann beliebig gewählt werden und ist unabhängig vom RFID-Lesegerät. Mit zunehmender Anzahl an Elementen können schärfere Nullstellen hervorgerufen und Plausibilitätsprüfungen durchgeführt werden. Die Unsicherheit durch überlagertes Rauschen kann damit verringert werden.

Entsprechendes gilt jedoch auch für andere Signalverarbeitungsvorrichtungen, die einen Wert für die Signalstärke der empfangenen Signale bereitstellen.

Im Gegensatz zu Antennen mit geringer Reichweite, wie sie beispielsweise im Stand der Technik für die Detektion von RFID-Transpondern eingesetzt werden, ergeben sich die folgenden Vorteile:

Die Antennenvorrichtung in Form einer Mehrkeulenantenne lässt sich flexibler platzieren, da sie nicht auf eine geringe Reichweite beschränkt ist. Somit kann die Mehrkeulenantenne in verschiedenen Szenarien eingesetzt werden.

Zudem ist eine geringere Sendeleistung des RFID-Lesegeräts ausreichend.

Technische Anwendungsgebiete liegen beispielsweise im Bereich der Logistik oder der Produktion bei der Flusskontrolle der Einfuhr oder Ausfuhr von Waren oder z. B. im Bereich der Gepäcksortierung. Insbesondere ist auch die Flusskontrolle bei Fördereinrichtungen, z. B. bei Förderbändern, Förderfahrzeugen möglich. Weitere Anwendungen beziehen sich auf automatisierte Zugangskontrolle, z. B. Personenkontrolle in Krankenhäusern, oder auf die Geschwindigkeitsbestimmung als Durchlaufgeschwindigkeit.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder teilweise in Hardware oder teilweise in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist. Der Datenträger oder das digitale Speichermedium oder das computerlesbare Medium sind typischerweise greifbar und/oder nicht flüchtig.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC oder beispielsweise ein Mikroprozessor, z. B. in Form einer ARM-Architektur.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

Referenzen:

[1] UHF RFID Low Range-Antenne (LoRa), Datenblatt, Firma Kathrein.

[2] UHF RFID Ultra Low Range-Antenne, Datenblatt, Firma Kathrein.

[3] C. Volmer et al., "An Eigen-Analysis of Compact Antenna Arrays and Its Application to Port Decoupling", IEEE transactions on antennas and propagation, vol. 56, no. 2, Seiten 360 - 370, 2008.

**Patentansprüche**

1. Vorrichtung (1) zur Bestimmung mindestens einer Information über eine Position mindestens eines die Vorrichtung (1) passierenden Senders (2),

   mit einer Antennenvorrichtung (3) und einer Datenverarbeitungsvorrichtung (5), wobei die Antennenvorrichtung (3) derartig ausgestaltet ist, von dem Sender (2) ausgehende Signale zu empfangen,
   wobei die Antennenvorrichtung (3) mindestens zwei ausgezeichnete Richtcharakteristiken aufweist,
   wobei die ausgezeichneten Richtcharakteristiken sich jeweils auf eine Menge an räumlich unterschiedlichen Empfangsempfindlichkeiten der Antennenvorrichtung (3) beziehen,
   wobei eine erste der ausgezeichneten Richtcharakteristiken über ein erstes Empfangsminimum verfügt,
   wobei eine zweite der ausgezeichneten Richtcharakteristiken über ein zweites Empfangsminimum und ein drittes Empfangsminimum verfügt,
   wobei das erste Empfangsminimum, das zweite Empfangsminimum und das dritte Empfangsminimum jeweils einem unterschiedlichen räumlichen Detektionsbereich (6, 6') zugeordnet sind,
   wobei die Datenverarbeitungsvorrichtung (5) derartig ausgestaltet ist, zumindest die von der Antennenvorrichtung (3) mit den ausgezeichneten Richtcharakteristiken empfangenen Signale im Hinblick auf die Position des Senders (2) relativ zu den Detektionsbereichen (6, 6') auszuwerten,
   wobei die Datenverarbeitungsvorrichtung (5) derartig ausgestaltet ist, zu unterschiedlichen Zeiten von der Antennenvorrichtung (3) empfangene Signale im Hinblick auf die Position des Senders (2) relativ zu den Detektionsbereichen (6, 6') auszuwerten,
   wobei die Vorrichtung (1) einen Datenspeicher (9) aufweist,
   wobei die Datenverarbeitungsvorrichtung (5) derartig ausgestaltet ist, den zu unterschiedlichen Zeitpunkten empfangenen Signalen zugeordnete Daten in dem Datenspeicher (9) zu hinterlegen, und
   wobei die Datenverarbeitungsvorrichtung (5) derartig ausgestaltet ist, aus den in dem Datenspeicher (9) hinterlegten Daten Zeitpunkte zu ermitteln, zu denen der Sender (2) die Detektionsbereiche (6, 6') passiert,
   wobei zur Ermittlung der Zeitpunkte Signalminima in den jeweiligen Detektionsbereichen (6, 6') verwendet sind,
   **dadurch gekennzeichnet,**
   **dass** die Antennenvorrichtung (3) ein Eigenmodenspeisenetzwerk (11) aufweist, und
   **dass** das Eigenmodenspeisenetzwerk (11) derartig ausgestaltet ist, die unterschiedlichen ausgezeichneten Richtcharakteristiken der Antennenvorrichtung (3) zu bewirken.

2. Vorrichtung (1) nach Anspruch 1,

   wobei die Vorrichtung eine Steuervorrichtung (4) aufweist, und
   wobei die Steuervorrichtung (4) derartig ausgestaltet ist, die ausgezeichneten Richtcharakteristiken zum Empfangen von von dem Sender (2) ausgehenden Signalen zu schalten.

3. Vorrichtung (1) nach einem der Ansprüche 1 oder 2,

   wobei die Vorrichtung eine Signalverarbeitungsvorrichtung (7) aufweist, und
   wobei die Signalverarbeitungsvorrichtung (7) derartig ausgestaltet ist, die von der Antennenvorrichtung (3) empfangenen Signale zu verarbeiten und jeweils einen Amplitudenwert einer Feldstärke des empfangenen

EP 3 414 588 B1

Signals zu ermitteln.

**4.** Vorrichtung (1) nach Anspruch 3,
wobei es sich bei der Signalverarbeitungsvorrichtung (7) um eine RFID-Lesevorrichtung handelt, die als Amplitudenwert der Feldstärke der empfangenen Signale jeweils einen "Received Signal Strength Indication" (RSSI)-Wert erzeugt.

**5.** Vorrichtung (1) nach einem der Ansprüche 1 bis 4,

wobei die Vorrichtung (1) eine Signalquelle (8) aufweist,
wobei die Signalquelle (8) derartig ausgestaltet ist, ein Anregungssignal zu erzeugen, und
wobei die Antennenvorrichtung (3) derartig ausgestaltet ist, das Anregungssignal abzustrahlen.

**6.** Vorrichtung (1) nach einem der Ansprüche 1 bis 5,
wobei es sich bei den Detektionsbereichen (6, 6') jeweils um eine Ebene handelt.

**7.** Vorrichtung (1) nach einem der Ansprüche 1 bis 6,
wobei die Antennenvorrichtung (3) als Mehrkeulenantenne ausgestaltet ist.

**8.** Vorrichtung (1) nach einem der Ansprüche 1 bis 7,
wobei die Antennenvorrichtung (3) mehrere Antennenelemente (10) aufweist.

**9.** Verfahren zur Ermittlung einer Information über eine Position eines Senders (2),

wobei mit zwei ausgezeichneten Richtcharakteristiken einer Antennenvorrichtung (3) von dem Sender (2) ausgehende Signale während eines Passierens der Antennenvorrichtung (3) empfangen werden,
wobei eine erste der ausgezeichneten Richtcharakteristiken über ein erstes Empfangsminimum verfügt,
wobei eine zweite der ausgezeichneten Richtcharakteristiken über ein zweites Empfangsminimum und ein drittes Empfangsminimum verfügt,
wobei das erste Empfangsminimum, das zweite Empfangsminimum und das dritte Empfangsminimum jeweils einem unterschiedlichen räumlichen Detektionsbereich (6, 6') zugeordnet sind,
wobei durch eine Datenverarbeitungsvorrichtung (5) zu unterschiedlichen Zeiten von der Antennenvorrichtung (3) empfangene Signale im Hinblick auf die Position des Senders (2) relativ zu den Detektionsbereichen (6, 6') ausgewertet werden, wobei durch die Datenverarbeitungsvorrichtung (5) den zu unterschiedlichen Zeitpunkten empfangenen Signalen zugeordnete Daten in einem Datenspeicher (9) zu hinterlegt werden, und
wobei durch die Datenverarbeitungsvorrichtung (5) aus den in dem Datenspeicher (9) hinterlegten Daten Zeitpunkte ermittelt werden, zu denen der Sender (2) die Detektionsbereiche (6, 6') passiert, wobei zur Ermittlung der Zeitpunkte Signalminima in den jeweiligen Detektionsbereichen (6, 6') verwendet werden,
**dadurch gekennzeichnet,**
**dass** die Antennenvorrichtung (3) ein Eigenmodenspeisenetzwerk (11) aufweist, mit dem die unterschiedlichen ausgezeichneten Richtcharakteristiken der Antennenvorrichtung (3) bewirkt werden.

**Claims**

**1.** A device (1) for determining at least one piece of information on a position of at least one transmitter (2) passing the device (1),

comprising an antenna device (3) and a data processing device (5),
wherein the antenna device (3) is configured to receive signals emanating from the transmitter (2),
wherein the antenna device (3) comprises at least two distinguished directional characteristics,
wherein the distinguished directional characteristics each relate to a set of spatially different receive sensitivities of the antenna device (3),
wherein a first one of the distinguished directional characteristics comprises a first receive minimum,
wherein a second one of the distinguished directional characteristics comprises a second receive minimum and a third receive minimum,
wherein the first receive minimum, the second receive minimum and the third receive minimum are each associated to a different spatial detection region (6, 6'),

wherein the data processing device (5) is configured to evaluate signals received at different times from the antenna device (3) as regards the position of the transmitter (2) relative to the detection region (6),

wherein the device (1) comprises a data storage (9),

wherein the data processing device (5) is configured to store data associated to the signals received at different times in the data storage (9), and

wherein the data processing device (5) is configured to establish, from the data stored in the data storage (9), points in time when the transmitter (2) passes the detection regions (6, 6'), wherein signal minima in the respective detection regions (6, 6') are used for establishing said points in time,

**characterized in that**

the antenna device (3) comprises an eigenmode feed network (11), and

the eigenmode feed network (11) is configured to cause different directional characteristics of the antenna device (3).

2. The device (1) according to claim 1,

wherein the device comprises a control device (4), and

wherein the control device (4) is configured to switch the distinguished directional characteristics for receiving signals emanating from the transmitter (2).

3. The device (1) according to claim 1 or 2,

wherein the device comprises a signal processing device (7), and

wherein the signal processing device (7) is configured to process the signals received from the antenna device (3) and to establish a respective amplitude value of a field strength of the signal received.

4. The device (1) according to claim 3,

wherein the signal processing device (7) is an RFID reader which generates a respective inverted "received signal strength indication" (RSSI) value as an amplitude value of the field strength of the signals received.

5. The device (1) according to any of claims 1 to 4,

wherein the device (1) comprises a signal source (8),

wherein the signal source (8) is configured to generate an excitation signal, and

wherein the antenna device (3) is configured to radiate the excitation signal.

6. The device (1) according to any of claims 1 to 5,

wherein each of the detection regions (6, 6') is a plane.

7. The device (1) according to any of claims 1 to 6,

wherein the antenna device (3) is implemented as a multi-beam antenna.

8. The device (1) according to any of claims 1 to 7,

wherein the antenna device (3) comprises several antenna elements (10).

9. A method for establishing a piece of information on a position of a transmitter (2)

wherein signals are received, emanating from the transmitter (2) with two distinguished directional characteristics of an antenna device (3), while passing the antenna device (3),

wherein a first one of the distinguished directional characteristics comprises a first receive minimum,

wherein a second one of the distinguished directional characteristics comprises a second receive minimum and a third receive minimum,

wherein the first receive minimum, the second receive minimum and the third receive minimum are each associated to a different spatial detection region (6, 6'),

wherein signals received at different times from the antenna device (3) as regards the position of the transmitter (2) relative to the detection regions (6, 6') are evaluated by a data processing device (5),

wherein data associated to signals received at different times are stored in a data storage (9) by the data processing device (5), and

wherein points in time when the transmitter (2) passes the detection regions (6, 6') are established from the data stored in the data storage (9) by the data processing device (5), wherein signal minima in the respective detection regions (6, 6') are used for establishing said points in time,

**characterized in that**

the antenna device (3) comprises an eigenmode feed network (11) used to cause different directional characteristics of the antenna device (3).


**Revendications**

1. Dispositif (1) pour déterminer au moins une information relative à une position d'au moins un émetteur (2) passant par le dispositif (1),

comprenant un dispositif d'antenne (3) et un dispositif de traitement de données (5), le dispositif d'antenne (3) étant conçu pour recevoir les signaux émis par l'émetteur (2),

le dispositif d'antenne (3) comprenant au moins deux caractéristiques directionnelles distinctes,

lesdites caractéristiques directionnelles distinctes se rapportant chacune à un ensemble de sensibilités de réception spatialement différentes du dispositif d'antenne (3),

une première des caractéristiques directionnelles distinctes comprenant un premier minimum de réception,

une deuxième des caractéristiques directionnelles distinctes comprenant un deuxième minimum de réception et un troisième minimum de réception,

le premier minimum de réception, le deuxième minimum de réception et le troisième minimum de réception étant chacun associés à une zone de détection spatiale différente (6, 6'),

le dispositif de traitement de données (5) étant conçu pour analyser, en ce qui concerne la position de l'émetteur (2) par rapport aux zones de détection (6, 6'), au moins les signaux reçus par le dispositif d'antenne (3) au moyen des caractéristiques directionnelles distinctes,

le dispositif de traitement de données (5) étant conçu pour analyser les signaux reçus à des instants différents par le dispositif d'antenne (3) en ce qui concerne la position de l'émetteur (2) par rapport aux zones de détection (6, 6'),

le dispositif (1) comprenant une mémoire de données (9),

le dispositif de traitement de données (5) étant conçu pour mémoriser dans la mémoire de données (9) des données associées aux signaux reçus à différents instants, et

le dispositif de traitement de données (5) étant conçu pour déterminer, à partir des données mémorisées dans la mémoire de données (9), des instants auxquels l'émetteur (2) passe par les zones de détection (6, 6'), des minima de signal dans les zones de détection respectives (6, 6') étant utilisés pour déterminer lesdits instants,

**caractérisé en ce que**

le dispositif d'antenne (3) comprend un réseau d'alimentation en modes propres (11), et

que le réseau d'alimentation en modes propres (11) est conçu pour produire les différentes caractéristiques directionnelles distinctes du dispositif d'antenne (3).

2. Dispositif (1) selon la revendication 1,

le dispositif comprenant un dispositif de commande (4), et

le dispositif de commande (4) étant conçu pour commuter entre les caractéristiques directionnelles distinctes pour recevoir les signaux émis par l'émetteur (2).

3. Dispositif (1) selon l'une des revendications 1 ou 2,

le dispositif comprenant un dispositif de traitement du signal (7), et

le dispositif de traitement du signal (7) étant conçu pour traiter les signaux reçus par

le dispositif d'antenne (3) et pour déterminer, pour chacun d'eux, une valeur d'amplitude de l'intensité de champ du signal reçu.

4. Dispositif (1) selon la revendication 3,

le dispositif de traitement du signal (7) étant un lecteur RFID qui génère, pour chacun des signaux reçus, une valeur RSSI (« Received Signal Strength Indication ») en tant que valeur d'amplitude de l'intensité de champ.

5. Dispositif (1) selon l'une des revendications 1 à 4,

le dispositif (1) comprenant une source de signal (8),

la source de signal (8) étant conçue pour générer un signal d'excitation, et le dispositif d'antenne (3) étant conçu pour rayonner le signal d'excitation.

6. Dispositif (1) selon l'une des revendications 1 à 5,

les zones de détection (6, 6') étant chacune un plan.

7. Dispositif (1) selon l'une des revendications 1 à 6,

le dispositif d'antenne (3) étant réalisé sous la forme d'une antenne multilobe.

8. Dispositif (1) selon l'une des revendications 1 à 7,

le dispositif d'antenne (3) comprenant plusieurs éléments d'antenne (10).

9. Procédé pour déterminer une information relative à la position d'un émetteur (2), dans lequel des signaux émis par l'émetteur (2) avec deux caractéristiques directionnelles distinctes d'un dispositif d'antenne (3) sont reçus lors du passage de l'émetteur par le dispositif d'antenne (3),

une première des caractéristiques directionnelles distinctes comprenant un premier minimum de réception, une deuxième des caractéristiques directionnelles distinctes comprenant un deuxième minimum de réception et un troisième minimum de réception,

le premier minimum de réception, le deuxième minimum de réception et le troisième minimum de réception étant chacun associés à une zone de détection spatiale différente (6, 6'),

dans lequel des signaux reçus à des instants différents par le dispositif d'antenne (3) sont analysés, par un dispositif de traitement de données (5), en ce qui concerne la position de l'émetteur (2) par rapport aux zones de détection (6, 6'),

dans lequel des données associées aux signaux reçus à différents instants sont mémorisées par le dispositif de traitement de données (5) dans une mémoire de données (9), et

des instants auxquels l'émetteur (2) passe par les zones de détection (6, 6') étant déterminés par le dispositif de traitement de données (5) à partir des données mémorisées dans la mémoire de données (9), des minima de signal dans les zones de détection respectives (6, 6') étant utilisés pour déterminer lesdits instants, **caractérisé en ce que**

le dispositif d'antenne (3) comprend un réseau d'alimentation en modes propres (11), au moyen duquel les différentes caractéristiques directionnelles distinctes du dispositif d'antenne (3) sont produites.

Fig. 1

Fig. 2

Fig. 3

Fig. 4

Fig. 5

Fig. 6

Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2011169613 A1
- WO 2009147662 A1
- WO 2011110882 A1
- DE 102008012534 A1

**In der Beschreibung aufgeführte Nicht-Patentliteratur**

- **C. VOLMER et al.** An Eigen-Analysis of Compact Antenna Arrays and Its Application to Port Decoupling. *IEEE transactions on antennas and propagation*, 2008, vol. 56 (2), 360-370